# EUROPEAN PATENT SPECIFICATION

(11) **EP 3 119 037 B1**
(45) Date of publication and mention of the grant of the patent: **30.10.2019**
(21) Application number: 15200237.4
(22) Date of filing: 15.12.2015
(51) Int. Cl.: H04L 12/28

(54) **METHOD AND APPARATUS FOR DOWNLOADING A CONTROL PROGRAM**
VERFAHREN UND VORRICHTUNG ZUM HERUNTERLADEN EINES STEUERPROGRAMMS
PROCÉDÉ ET APPAREIL DESTINÉS À TÉLÉCHARGER UN PROGRAMME DE COMMANDE

(30) Priority: 13.07.2015 CN 201510409111
(43) Date of publication of application: 18.01.2017
(73) Proprietor: Xiaomi Inc., Beijing 100085 (CN)
(72) Inventor: WANG, Yuanbo, BEIJING 100085 (CN); DING, Yi, BEIJING 100085 (CN); HOU, Enxing, BEIJING 100085 (CN)
(74) Representative: Cougard, Jean-Marie

(56) References cited:
- EP-A1- 2 394 719
- EP-A1- 2 611 079
- EP-A1- 2 747 375
- EP-A1- 2 833 612
- EP-A2- 2 031 848

## Description

### TECHNICAL FIELD

The present disclosure relates to the field of communication and, more particularly, to a method and an apparatus for downloading a control program.

### BACKGROUND

Internet of things is one kind of Internet in which several things are connected. All the electronic apparatuses in a household can be connected to Internet of things. In Internet of things, a user may control individual electronic apparatuses in the household via his mobile phone, which greatly facilitates the user. For example, before arriving home after being off duty, the user may control an air conditioner in the household to start to cool in advance via his mobile phone, in this way, the user may feel nice and cool once arriving home.

Before using the mobile phone to control the electronic apparatus, the user needs to download a control program for controlling the electronic apparatus in the mobile phone, and then the control program may be used to control the electronic apparatus. Conventionally, when downloading a control program, the user firstly connects the mobile phone to Internet, and then downloads the control program from Internet.

Document EP 2 611 079 A1 discloses a network system of a home appliance configured to set up a network of the home appliance by using a terminal, and a network set-up method of the same.

Document EP 2 031 848 A2 discloses a device control method for a mobile terminal having a touch screen, the method including downloading, during registration of a device capable of short-range wireless communication operating in a short-range communication mode, a user interface of the device.

### SUMMARY

The present invention is defined in the appended independent claims to which reference should be made. Advantageous features are set out in the appended dependent claims.

The technical solutions provided by embodiments of the present disclosure may include the following advantageous effects:
by establishing a LAN connection with a device to be controlled, and downloading a control program of controlling the device to be controlled from the device to be controlled through the LAN connection, even if the mobile terminal cannot download from Internet the control program of the device to be controlled, the mobile terminal can download it from the device to be controlled and achieve the control of said device.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.

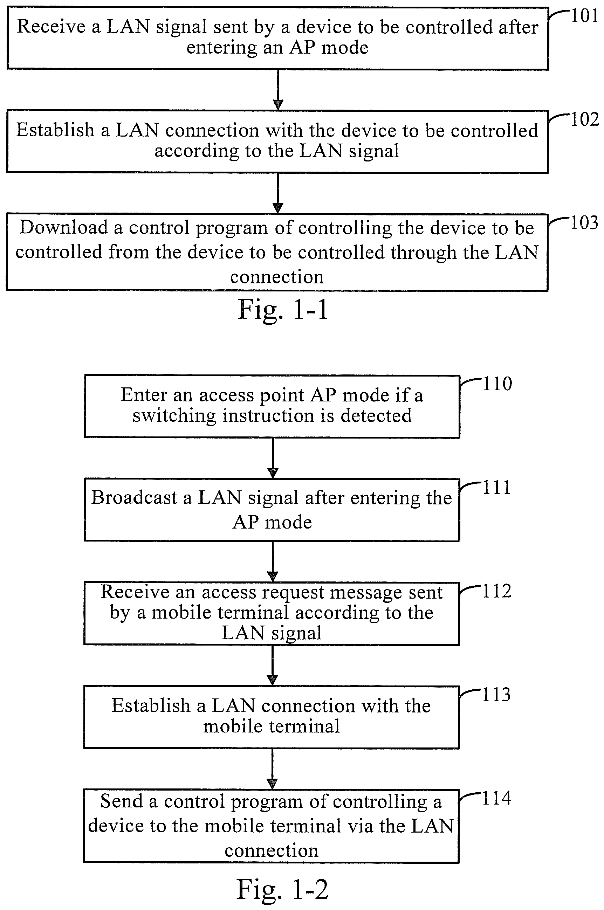

Fig. 1-1 is a flow chart of a method of downloading a control program, according to one exemplary embodiment;
Fig. 1-2 is a flow chart of a method of uploading a control program, according to another exemplary embodiment;
Fig. 2-1 is a flow chart of a method of downloading a control program, according to another exemplary embodiment;
Fig. 2-2 is a schematic diagram of an interface, according to one exemplary embodiment;

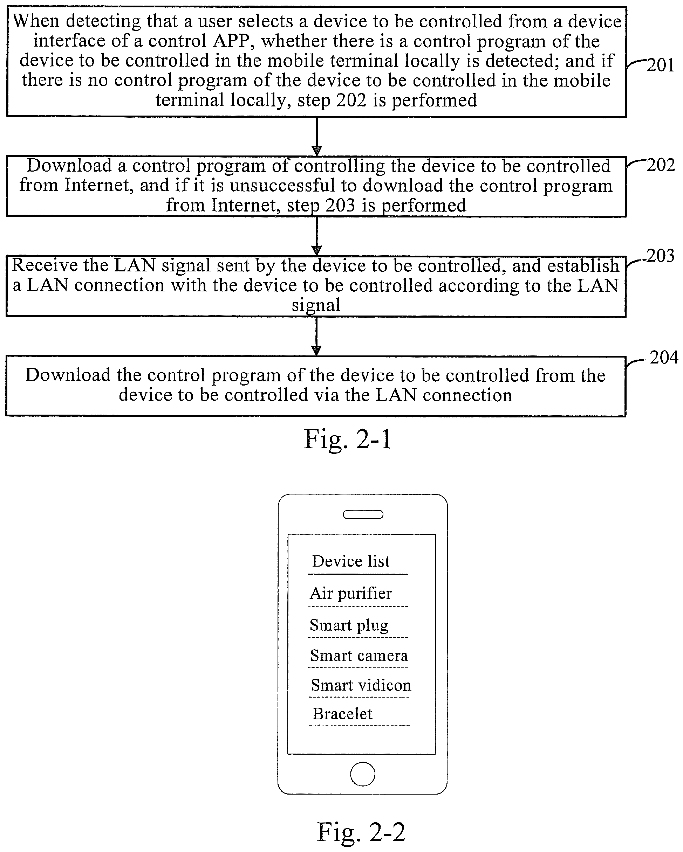

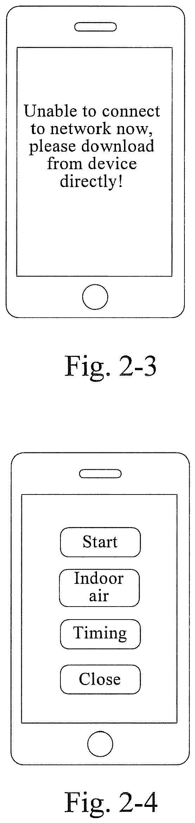

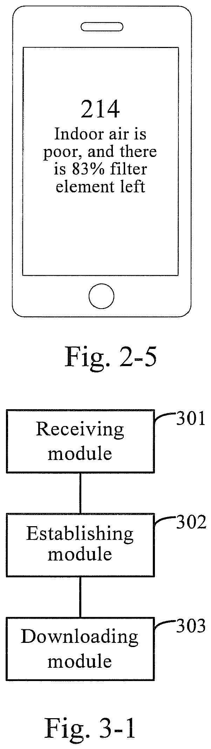

Fig. 2-3 is a schematic diagram of an interface, according to another exemplary embodiment;
Fig. 2-4 is a schematic diagram of an interface, according to another exemplary embodiment;
Fig. 2-5 is a schematic diagram of an interface, according to another exemplary embodiment;
Fig. 3-1 is a block diagram of an apparatus for downloading a control program, according to one exemplary embodiment;

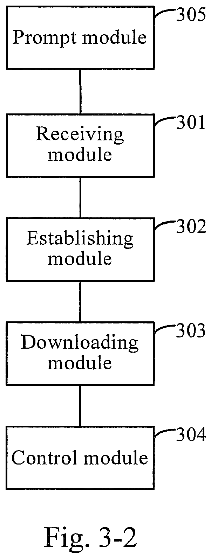

Fig. 3-2 is a block diagram of an apparatus for downloading a control program, according to another exemplary embodiment;

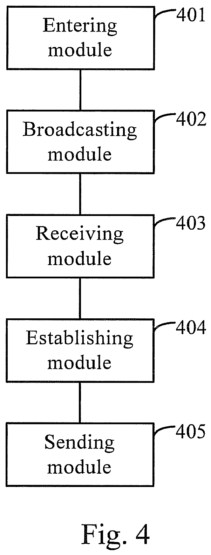

Fig. 4 is a block diagram of an apparatus for downloading a control program, according to another exemplary embodiment;

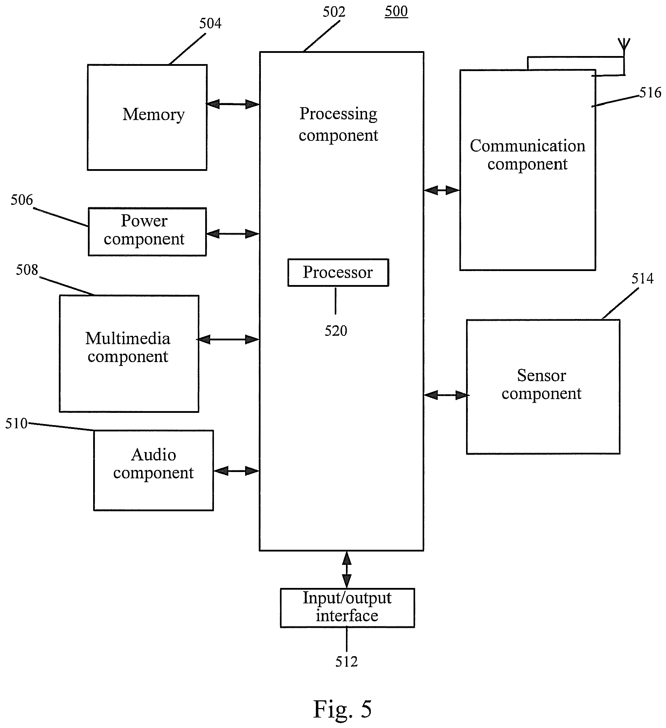

Fig. 5 is a block diagram of an apparatus for downloading a control program, according to another exemplary embodiment; and

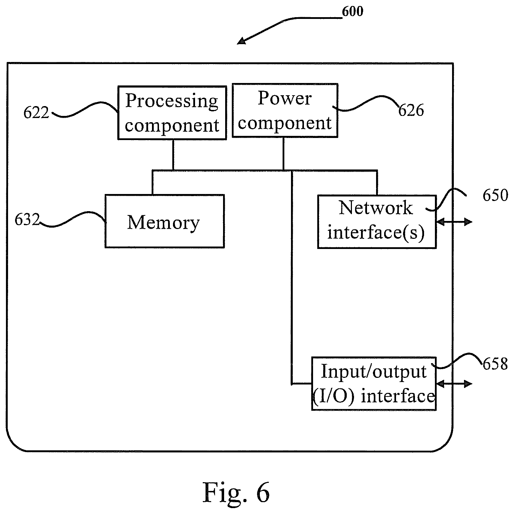

Fig. 6 is a block diagram of an apparatus for downloading a control program, according to another exemplary embodiment;

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with some aspects related to the invention as recited in the appended claims.

Conventionally, the user utilizes a mobile terminal to download a control program for controlling a device to be controlled from Internet; however, sometimes the mobile terminal may not connect to Internet or cannot download the control program from Internet, resulting in failure of downloading the control program. In embodiments of the present invention, when failing to download the control program from Internet, any of the following embodiments may be used to download the control program from the device to be controlled.

Fig. 1-1 shows a method implemented by a mobile terminal for downloading a control program, according to one exemplary embodiment, the method including the following steps.

In step 101, a LAN (Local Area Network) signal sent by a device to be controlled after entering an AP (Access Point) mode is received.

In step 102, a LAN connection with the device to be controlled is established according to the LAN signal.

In step 103, a control program for controlling the device to be controlled is downloaded from the device to be controlled through the LAN connection.

According to a particular embodiment, in step 101, when it is determined that downloading the control program of controlling the device to be controlled via Internet is unsuccessful, the LAN signal sent by the device to be controlled after entering the AP mode is received.

Whether the control program is successfully downloaded via Internet may be detected according to detecting conditions set by a user. For instance, when detecting the conditions of no router, no network, no authority of accessing Internet, failure of connecting to Internet by the apparatus, or the like, it can be determined that it is unsuccessful to download the control program via Internet.

Alternatively, in step 101, when it is determined that downloading the control program via Internet is unsuccessful, prompt information can be issued for prompting a user that downloading the control program via Internet is unsuccessful.

When detecting an instruction of converting a manner of acquiring the control program inputted by the user, the LAN signal sent by the device to be controlled after entering the AP mode is received.

In embodiments of the present disclosure, by establishing a LAN connection with a device to be controlled, and downloading a control program for controlling the device to be controlled from the device to be controlled through the LAN connection, even if a mobile terminal cannot download a control program of a device to be controlled from Internet, the mobile terminal may download it from the device to be controlled and achieve the control of said device.

Fig. 1-2 shows a method implemented by a device for uploading a control program, according to another exemplary embodiment, the method including the following steps.

In step 110, if a switching instruction is detected, an access point (AP) mode is entered.

In step 111, a LAN signal is broadcasted after entering the AP mode.

In step 112, an access request message sent by a mobile terminal according to the LAN signal is received.

In step 113, a LAN connection with the mobile terminal is established.

In step 114, a control program for controlling the device is sent to the mobile terminal via the LAN connection.

Alternatively, in step 110, the device may include a switching button which may trigger a switching instruction when being pressed down, and the device enters an AP mode when the switching instruction is detected; or the device receives a switching instruction which is triggered by an input voice from the user and then enters the AP mode.

In the embodiments of the present disclosure, when the mobile terminal does not successfully download the control program for controlling the device from Internet, an access request message sent by the mobile terminal is received, a LAN connection is established with the mobile terminal, and the control program of the device is sent to the mobile terminal through the LAN connection; in this way, even if the mobile terminal cannot download a control program of the device from Internet, the mobile terminal may download it from the device and achieve the control to the device.

Fig. 2-1 shows a flow chart of a method of uploading a control program, according to an exemplary embodiment. The executing body of the present embodiment may be a mobile terminal. The mobile terminal may be a mobile phone, a tablet, a PDA, or the like. The method of downloading a control program may include the following steps.

In step 201, when detecting that a user selects a device to be controlled from a device interface of a control APP (Application), whether there is a control program of the device to be controlled in the mobile terminal locally is detected; and if there is no control program of the device to be controlled in the mobile terminal locally, step 202 is performed.

The user installs a control APP for controlling devices in the mobile terminal in advance, and the control APP includes a device list including various types of devices which could be controlled by the control APP. When the control APP is just installed in the mobile terminal, the control APP can only control some basic functions of the device, for instance, control an account binding between the device and the user, or control the device to connect to network. The basic functions of the device are functions which could be controlled by the control APP directly.

In the present embodiment, each type of the devices corresponds to a control program which is used for controlling other functions of the device in addition to the basic functions. The control program at least includes a control interface and a control command for controlling the device, and each control command is corresponding to one function included in the device for controlling its corresponding function. In the present embodiment, in order to enable the mobile terminal to control all the functions of the device, the mobile terminal needs to download the control program for controlling the device and install it in the control APP, then the mobile terminal may control all the functions of the device through the control APP.

Thereby, in step 201, if the user wants to use the mobile terminal to control all the functions of a certain device, the user may start the control APP in the mobile terminal, and the mobile terminal displays a device interface of the control APP, the device interface including a device list. The user may select one device he desires to control from the device list as the device to be controlled; the mobile terminal acquires the device to be controlled which is selected by the user, and detects whether there is a control program of the device to be controlled; and if there is no control program of the device to be controlled, step 202 is performed.

If the mobile terminal includes a control program of the device to be controlled locally, the mobile terminal directly calls the control program and controls the device to be controlled via the control program. The procedure may be as follows.

The mobile terminal displays a control interface included in the control program, the control interface including at least one control port corresponding to one or more control commands included in the control program; and when detecting that the user clicks a certain control port in the control interface, acquires a control command corresponding to the control port clicked by the user, and sends the control command to the device such that the device executes the control command.

For example, referring to the device interface of the control APP shown in Fig. 2-2, the device interface includes a device list including various types of devices, such as an air purifier, a smart plug, a smart camera, a smart vidicon, a bracelet, and the like. After the user starts the control APP in the mobile terminal, the mobile terminal displays the device interface of the control APP, and then the user selects one device as the device to be controlled from the device interface by his finger. Assuming that the selected device is an air purifier, i.e., the air purifier is the device to be controlled.

The mobile terminal acquires the air purifier selected by the user, and detects whether there is a control program of controlling the air purifier locally. Assuming that the detection result is that there is no control program of controlling the air purifier locally, step 202 is performed.

In step 202, a control program of controlling the device to be controlled is downloaded from Internet, and if it is unsuccessful to download the control program from Internet, step 203 is performed.

In the above case, the mobile terminal fails to connect to Internet, which results in that the mobile terminal cannot successfully download the control program from Internet. In the embodiments of the present disclosure, the device to be controlled includes a MCU (Microcontroller Unit) including a flash memory, i.e., the device to be controlled includes a flash memory. Before the device to be controlled leaves the factory, the flash memory included in the device to be controlled is set to be relatively large, and a control program of controlling the device to be controlled is pre-stored in the flash memory of the device, such that when the mobile terminal cannot successfully download the control program for controlling the device from Internet, the mobile terminal can download the control program of the device to be controlled from the device to be controlled.

The control program of the device to be controlled is a program which is developed based on Html5 (HyperText Markup Language, the fifth amended HyperText Markup Language). Since a capacity of the program developed by Html is relative small, a capacity of the control program of the device to be controlled is relatively small, and a storage space occupied by the control program of the device to be controlled in the flash memory of the device to be controlled is relatively small. In addition, Since the control program developed by Html5 technology is adopted, the control program may be compatible with an ios (mobile operating system) platform and an Android platform.

In the embodiments of the present disclosure, in the flash memory of the device to be controlled, the control program of the device to be controlled is in a form of a plug-in, an APK (Android Package) or an APP.

In the embodiments of the present disclosure, if the mobile terminal fails to successfully download the control program from Internet, the device to be controlled enters an AP mode, and only in the AP mode, the control program is allowed to be downloaded from the mobile terminal per se, the implementing procedure is as follows.

When the mobile terminal finds that it is impossible to successfully download the control program from Internet, the mobile terminal may display prompt information to the user to notify the user that it is unable to download the control program from Internet successfully. The device to be controlled includes a switching button, which may be a physical button on the device to be controlled, or may be a virtual button displayed on a display screen of the device to be controlled. The user may click the switching button to trigger a switching instruction to the device to be controlled, and when detecting the switching instruction triggered by clicking the switching button, the device to be controlled enters the AP mode; or the user directly triggers the switching instruction via a voice inputting mode to the device to be controlled, and when detecting the switching instruction triggered by inputting voice, the device to be controlled enters the AP mode.

Optionally, whether being capable of downloading a control program from Internet is found according to detecting conditions set by the user, for example, when detecting the conditions of no router, no network, no authority of accessing Internet, failure of connecting to Internet by the apparatus, or the like, it can be judged that it is unable to download the control program from Internet.

After the device to be controlled enters the AP mode, the device to be controlled becomes an AP for broadcasting a LAN signal to surroundings, so as to enable the mobile terminal to access the device to be controlled and download the control program from the device to be controlled. For example, after entering the AP mode, the device to be controlled may become a Wifi hotspot and broadcast a Wifi signal round.

For example, referring to Fig. 2-3, when the mobile terminal detects that there is no control program of the air purifier locally, the mobile terminal connects to Internet and finds that it is unable to connect Internet, then the mobile terminal displays prompt information "Unable to connect to network now, please download from device directly!". Then, the user presses down the switching button on the air purifier, the switching button being a physical button. When detecting the switching instruction triggered by pressing the switching button, the air purifier enters the AP mode, sets itself to be a Wifi access point, and broadcasts Wifi signal to surroundings.

In step 203, the LAN signal sent by the device to be controlled is received, and a LAN connection with the device to be controlled is established according to the LAN signal.

The mobile terminal receives a LAN signal sent by the device to be controlled, and sends an access request message to the device to be controlled according to the LAN signal. After receiving the access request message, the device to be controlled sends an access response message to the mobile terminal so as to establish a LAN connection with the device to be controlled. For instance, the mobile terminal receives a Wifi signal sent by an air purifier, and accesses the air purifier according to the Wifi signal so as to establish a Wifi connection with the air purifier.

Alternatively, in step 203, when receiving the LAN signal sent by the device to be controlled, prompt information may be issued, the prompt information being for prompting the user that it is unsuccessful to download the control program through Internet; and when detecting an instruction for converting a manner of acquiring the control program which is inputted by the user, the LAN signal sent by the device to be controlled is received.

In step 204, the control program of the device to be controlled is downloaded from the device to be controlled via the LAN connection.

The mobile terminal may send a downloading command to the device to be controlled via the LAN connection, then the device to be controlled receives the downloading command and sends the control program to the mobile terminal; and then the mobile terminal receives the control program so as to download the control program.

After receiving the control program, the mobile terminal may display the interface included in the control program. The control interface includes at least one control port, and each control port in the at least one control interface is corresponding to one or more control command in the control program. The user may click a certain interface port, then the mobile terminal acquires a control command corresponding to this control port, and sends the control command corresponding to this control port to the device to be controlled via LAN with the device to be controlled; and then the device to be controlled receives and executes the control command sent by the mobile terminal so as to control the device to be controlled.

For instance, the mobile terminal may send a downloading command to an air purifier via a Wifi connection with the air purifier, then the air purifier receives the downloading command and sends its control program to the mobile terminal; and then the mobile terminal receives the control program so as to download the control program. The control program includes a control interface and a plurality of control commands shown in Fig. 2-4, wherein the control interface includes four control ports, which are respectively "Start", "Indoor air", "Timing" and "Close", and the plurality of control commands are respectively a starting command corresponding to "Start", an acquiring command for acquiring a quality of indoor air corresponding to "Indoor air", a timing command corresponding to "Timing" and a close command corresponding to "Close".

After downloading the control program, the mobile terminal displays the control interface shown in Fig. 2-4. Assuming that the user clicks "Indoor air", the mobile terminal acquires the acquiring command corresponding to "Indoor air", and sends the acquiring command to an air purifier via a Wifi connection with the air purifier; then the air purifier receives the acquiring command, acquires the current air quality information to be "214, Indoor air is poor, and there is 83% filter element left", then sends the air quality information to the mobile terminal via the Wifi connection; and then the mobile terminal receives the air quality information, and displays the air quality information in the control interface, as shown in Fig. 2-5.

In the embodiments of the present disclosure, when it is unsuccessful to download the control program of controlling the device to be controlled from Internet, by establishing a LAN connection with a device to be controlled, and downloading a control program of controlling the device to be controlled from the device to be controlled through the LAN connection, even if the mobile terminal cannot download the control program of the device to be controlled from Internet, the mobile terminal can download it from the device to be controlled and achieve the control to the device.

Embodiments of devices of the present disclosure are described hereinafter, which may be used for performing embodiments of methods of the present disclosure. For the details not described in the embodiments of devices of the present disclosure, please refer to the embodiments of methods of the present disclosure.

Fig. 3-1 shows an apparatus for downloading a control program, according to one exemplary embodiment. The apparatus may include a receiving module 301, an establishing module 302 and a downloading module 303.

The receiving module 301 is configured to receive a LAN signal sent by a device to be controlled after entering an AP mode.

The establishing module 302 is configured to establish a LAN connection with the device to be controlled according to the LAN signal.

The downloading module 303 is configured to download a control program of controlling the device to be controlled from the device to be controlled through the LAN connection.

Alternatively, the control program at least includes a control interface for controlling the device to be controlled and a control command for controlling the device to be controlled, the control interface including at least one control port corresponding to one or more control commands in the control program.

Alternatively, referring to Fig. 3-2, the apparatus further includes a control module 304.

The control module 304 is configured to receive the control port selected in the control interface by a user, acquire the control command corresponding to the selected control port, and send the acquired control command to the device to be controlled via the LAN, such that the device to be controlled executes the acquired control command.

Alternatively, the receiving module 301 is configured to, if judging that downloading the control program of controlling the device to be controlled via Internet is unsuccessful, receive the LAN signal sent by the device to be controlled after entering the AP mode.

Alternatively, referring to Fig. 3-2, the apparatus further includes a prompt module 305.

The prompt module 305 is configured to, if judging that downloading the control program of controlling the device to be controlled via Internet is unsuccessful, issue prompt information for prompting a user that downloading the control program of controlling the device to be controlled via Internet is unsuccessful.

The receiving module 301 is configured to, if detecting an instruction of converting manner of acquiring control program inputted by the user, receive the LAN signal sent by the device to be controlled after entering the AP mode.

Alternatively, the control program is a program developed based on the fifth amended HyperText markup language Html5, and the control program is compatible with a mobile operating system ios platform and an android platform.

In the embodiments of the present disclosure, when it is unsuccessful to download the control program of controlling the device to be controlled from Internet, by establishing a LAN connection with a device to be controlled, and downloading a control program of controlling the device to be controlled from the device to be controlled through the LAN connection, even if the mobile terminal cannot download the control program of the device to be controlled from Internet, the mobile terminal can download it from the device to be controlled and achieve the control to the device.

Fig. 4 shows an apparatus for downloading a control program, according to an exemplary embodiment. The apparatus may include an entering module 401, a broadcasting module 402, a receiving module 403, an establishing module 404, and a sending module 405.

The entering module 401 is configured to, if detecting a switching instruction, enter an Access Point (AP) mode.

The broadcasting module 402 is configured to broadcast a LAN signal after entering the AP mode.

The receiving module 403 is configured to receive an access request message sent by a mobile terminal according to the LAN signal.

The establishing module 404 is configured to establish a LAN connection with the mobile terminal.

The sending module 405 is configured to send a control program of controlling the apparatus to the mobile terminal via the LAN connection.

Alternatively, the control program is a program developed based on the fifth amended HyperText markup language Html5, and the control program is compatible with a mobile operating system ios platform and an android platform.

In the embodiments of the present disclosure, when the mobile terminal does not successfully download the control program of controlling the device to be controlled from Internet, an access request message sent by the mobile terminal is received, a LAN connection with the device to be controlled is established, and the control program of controlling the device to be controlled is downloaded from the device to be controlled through the LAN connection; in this way, even if the mobile terminal cannot download the control program of the device to be controlled from Internet, the mobile terminal can download it from the device to be controlled and achieve the control to the device.

With respect to the devices in the above embodiments, the specific manners for performing operations for individual modules therein have been described in detail in the embodiments regarding the methods, which will not be elaborated herein.

Fig. 5 shows a block diagram of a device 500 of downloading a control program, according to one exemplary embodiment of the present disclosure. For example, the device 500 may be a mobile phone, a computer, a digital broadcast terminal, a messaging device, a gaming console, a tablet, a medical device, exercise equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and/or the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 504, executable by the processor 520 in the device 500, for performing the above-described methods. For example, the non-transitory computer-readable storage medium may be a ROM, a RAM, a CD-ROM, a magnetic tape, a floppy disc, an optical data storage apparatus, and the like.

A non-transitory computer-readable storage medium, when instructions in the storage medium is executed by the processor of the device 500, enables the device 500 to perform a method for downloading a control program, the method including:
receiving a Local Area Network LAN signal sent by a device to be controlled after entering an Access Point (AP) mode;
establishing a LAN connection with the device to be controlled according to the LAN signal; and
downloading a control program of controlling the device to be controlled from the device to be controlled through the LAN connection.

Alternatively, the control program at least includes a control interface for controlling the device to be controlled and a control command for controlling the device to be controlled, the control interface including at least one control port corresponding to one or more control commands in the control program, and the method further includes:
receiving the control port selected in the control interface by a user, acquiring the control command corresponding to the control port, and sending the acquired control command to the device to be controlled via the LAN, such that the device to be controlled executes the acquired control command.

Alternatively, before receiving the LAN signal sent by the device to be controlled after entering the AP mode, the method includes:
when judging that downloading the control program of controlling the device to be controlled via Internet is unsuccessful, receiving the LAN signal sent by the device to be controlled after entering the AP mode.

Alternatively, before receiving the LAN signal sent by the device to be controlled after entering the AP mode, the method includes:
if judging that downloading the control program of controlling the device to be controlled via Internet is unsuccessful, issuing prompt information for prompting a user that downloading the control program of controlling the device to be controlled via Internet is unsuccessful;
if detecting an instruction of converting manner of acquiring control program inputted by the user, receiving the LAN signal sent by the device to be controlled after entering the AP mode.

Alternatively, the control program is a program developed based on the fifth amended HyperText markup language Html5, and the control program is compatible with a mobile operating system ios platform and an android platform.

In embodiments of the present disclosure, when it is unsuccessful to download the control program of controlling the device to be controlled from Internet, by establishing a LAN connection with a device to be controlled, and downloading a control program of controlling the device to be controlled from the device to be controlled through the LAN connection, even if the mobile terminal cannot download the control program of the device to be controlled from Internet, the mobile terminal can download it from the device to be controlled and achieve the control to the device.

Fig. 6 shows a block diagram of a device 600 of downloading a control program, according to an exemplary embodiment. For example, the device 600 may be provided as a server. Referring to Fig. 6, the device 600 includes a processing component 622 that further includes one or more processors, and memory resources represented by a memory 632 for storing instructions, such as application programs, executable by the processing component 622. The application programs stored in the memory 632 may include one or more modules, each of them corresponding to a set of instructions. Further, the processing component 622 is configured to execute the instructions to perform the above described method.

The device 600 may also include a power component 626 configured to perform power management of the device 600, wired or wireless network interface(s) 650 configured to connect the device 600 to a network, and an input/output (I/O) interface 658. The device 600 may operate based on an operating system stored in the memory 632, such as Windows ServerTM, Mac OS XTM, UnixTM, LinuxTM, FreeBSDTM, or the like.

If detecting a switching instruction, an access point (AP) mode is entered.

A LAN signal is broadcasted after entering the AP mode.

An access request message sent by a mobile terminal according to the LAN signal is received.

A LAN connection established with the mobile terminal.

A control program of controlling a device is sent to the mobile terminal via the LAN connection.

Alternatively, the control program is a program developed based on the fifth amended HyperText markup language Html5, and the control program is compatible with a mobile operating system ios platform and an android platform.

In the embodiments of the present disclosure, when the mobile terminal does not successfully download the control program of controlling the device to be controlled from Internet, an access request message sent by the mobile terminal is received, a LAN connection with a device to be controlled is established, and a control program of controlling the device to be controlled is downloaded from the device to be controlled through the LAN connection; in this way, even if the mobile terminal cannot download the control program of the device to be controlled from Internet, the mobile terminal can download it from the device to be controlled and achieve the control to the device.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method implemented by a system comprising a mobile terminal and a device to be controlled, the method comprises the steps of:
when a switching instruction is detected, the device entering (110) an Access Point, AP, mode, wherein the AP mode is a Wifi AP mode;
when it is determined that downloading via Internet a control program for controlling the device is unsuccessful, the mobile terminal issuing prompt information for prompting a user that downloading the control program for controlling the device via Internet is unsuccessful;
when an instruction of converting a manner of acquiring the control program inputted by the user is detected, the mobile terminal receiving (101) a Local Area Network, LAN, signal sent by the device after entering the AP mode, wherein the LAN signal is a Wifi broadcast signal;
the device receiving (112) an access request message sent by the mobile terminal according to the LAN signal;
the mobile terminal establishing (102) a LAN connection with the device according to the LAN signal, said LAN connection being a Wifi connection; and
the mobile terminal downloading (103) from the device, through the LAN connection, the control program for controlling said device.

2. The method according to claim 1, **characterized in that**, the control program at least comprises a control interface for controlling the device and a control command for controlling said device, the control interface including at least one control port corresponding to one or more control commands in the control program, the method further comprising the steps of:
the mobile terminal receiving the control port selected in the control interface by a user, acquiring the control command corresponding to the selected control port, and sending the acquired control command to the device via the LAN, such that the device executes the acquired control command.

3. The method according to claim 1 or 2, **characterized in that**, the control program is a program developed based on the fifth amended HyperText markup language Html5, and the control program is compatible with a mobile operating system ios platform and an android platform.

4. A computer program including instructions which, when the program is executed by a computer, cause the computer to carry out the steps of the method according to any one of claims 1 to 3.

5. A system comprising a mobile terminal operable to download a control program and a device operable to upload the control program,
wherein the device comprises an entering module (401) configured, when a switching instruction is detected, to enter an access point, AP, mode, wherein the AP mode is a Wifi AP mode;
wherein the mobile terminal comprises:
- a prompt module (305) configured, when downloading via Internet the control program for controlling the device is determined to be unsuccessful, to issue prompt information for prompting a user that downloading via Internet the control program for controlling the device is unsuccessful; and
- a receiving module (301) configured, when an instruction of converting a manner of acquiring the control program inputted by the user is detected, to receive a Local Area Network, LAN, signal sent by the device after entering the AP mode, wherein the LAN signal is a Wifi broadcast signal;
wherein the device further comprises:
- a broadcasting module (402) configured to broadcast the LAN signal after entering the AP mode;
- a receiving module (403) configured to receive an access request message sent by the mobile terminal according to the LAN signal;
- an establishing module (404) configured to establish a LAN connection with the mobile terminal, said LAN connection being a Wifi connection; and
- a sending module (405) configured to send to the mobile terminal, via the LAN connection, the control program for controlling said device; and
wherein the mobile terminal further comprises:
- an establishing module (302) configured to establish the LAN connection with the device according to the LAN signal; and
- a downloading module (303) configured to download, from the device, through the LAN connection, the control program for controlling said device.

6. The system according to claim 5, **characterized in that**,
the control program at least comprises a control interface for controlling the device and a control command for controlling the device to be controlled, the control interface including at least one control port corresponding to one or more control commands in the control program, the mobile terminal further comprising:
a control module (304) configured to receive the control port selected in the control interface by a user, acquire the control command corresponding to the selected control port, and send the acquired control command to the device to be controlled via the LAN, such that the device to be controlled executes the acquired control command.

7. The system according to claim 5 or 6, **characterized in that**, the control program is a program developed based on the fifth amended HyperText markup language Html5, and the control program is compatible with a mobile operating system ios platform and an android platform.

## Patentansprüche

1. Verfahren, das von einem System implementiert wird, welches ein mobiles Endgerät und eine zu steuernde Vorrichtung umfasst, wobei das Verfahren die Schritte umfasst des:
wenn eine Schaltanweisung erkannt wird, Eintretens (110) der Vorrichtung in einen Access-Point-(AP)-Modus, wobei der AP-Modus ein Wifi-AP-Modus ist,
wenn bestimmt wird, dass das Herunterladen eines Steuerprogramms zum Steuern der Vorrichtung über das Internet nicht erfolgreich ist, Ausgebens von Hinweisinformationen durch das mobile Endgerät, um einen Benutzer darauf hinzuweisen, dass das Herunterladen des Steuerprogramms zum Steuern der Vorrichtung über das Internet nicht erfolgreich ist,
wenn eine Anweisung zum Umwandeln einer Art der Erfassung des von dem Benutzer eingegebenen Steuerprogramms erkannt wird, Empfangens (101) eines Local-Area-Network-(LAN)-Signals, das von der Vorrichtung nach Eintreten in den AP-Modus gesendet wird, wobei das LAN-Signal ein Wifi-Übertragungssignal ist, durch das mobile Endgerät,
Empfangens (112) einer Zugriffsanforderungsnachricht, die von dem mobilen Endgerät gemäß dem LAN-Signal gesendet wird, durch die Vorrichtung,
Herstellens (102) einer LAN-Verbindung mit der Vorrichtung gemäß dem LAN-Signal durch das mobile Endgerät, wobei die LAN-Verbindung eine Wifi-Verbindung ist, und
Herunterladens (103) des Steuerprogramms zum Steuern der Vorrichtung von der Vorrichtung über die LAN-Verbindung durch das mobile Endgerät.

2. Verfahren nach Anspruch 1, **dadurch gekennzeichnet, dass** das Steuerprogramm mindestens eine Steuerschnittstelle zum Steuern der Vorrichtung und einen Steuerbefehl zum Steuern der Vorrichtung umfasst, wobei die Steuerschnittstelle mindestens einen Control Port beinhaltet, der einem oder mehreren Steuerbefehl/en in dem Steuerprogramm entspricht, und das Verfahren ferner die Schritte umfasst des:
Empfangens des von einem Benutzer in der Steuerschnittstelle ausgewählten Control Ports, Erfassens des dem ausgewählten Control Port entsprechenden Steuerbefehls und Sendens des erfassten Steuerbefehls über das LAN an die Vorrichtung durch das mobile Endgerät, sodass die Vorrichtung den erfassten Steuerbefehl ausführt.

3. Verfahren nach Anspruch 1 oder 2, **dadurch gekennzeichnet, dass** das Steuerprogramm ein basierend auf der fünften geänderten HyperText-Auszeichnungssprache Html5 entwickeltes Programm ist und das Steuerprogramm mit einem mobilen Betriebssystem der ios-Plattform und einer Android-Plattform kompatibel ist.

4. Computerprogramm, das Anweisungen beinhaltet, die, wenn das Programm von einem Computer ausgeführt wird, den Computer veranlassen, die Schritte des Verfahrens nach einem der Ansprüche 1 bis 3 auszuführen.

5. System, umfassend ein mobiles Endgerät, das zum Herunterladen eines Steuerprogramms betriebsfähig ist, und eine Vorrichtung, die zum Hochladen des Steuerprogramms betriebsfähig ist,
wobei die Vorrichtung ein Eintrittsmodul (401) umfasst, das dazu ausgestaltet ist, wenn eine Schaltanweisung erkannt wird, in einen Access-Point-(AP)-Modus einzutreten, wobei der AP-Modus ein Wifi-AP-Modus ist,
wobei das mobile Endgerät umfasst:
- ein Hinweismodul (305), das dazu ausgestaltet ist, wenn bestimmt wird, dass das Herunterladen des Steuerprogramms zum Steuern der Vorrichtung über das Internet nicht erfolgreich ist, Hinweisinformationen auszugeben, um einen Benutzer darauf hinzuweisen, dass das Herunterladen des Steuerprogramms zum Steuern der Vorrichtung über das Internet nicht erfolgreich ist, und
- ein Empfangsmodul (301), das dazu ausgestaltet ist, wenn eine Anweisung zum Umwandeln einer Art der Erfassung des von dem Benutzer eingegebenen Steuerprogramms erkannt wird, ein Local-Area-Network-(LAN)-Signal zu empfangen, das von der Vorrichtung nach dem Eintreten in den AP-Modus gesendet wird, wobei das LAN-Signal ein Wifi-Übertragungssignal ist, wobei die Vorrichtung ferner umfasst:
- ein Übertragungsmodul (402), das dazu ausgestaltet ist, das LAN-Signal nach dem Eintreten in den AP-Modus zu übertragen,
- ein Empfangsmodul (403), das dazu ausgestaltet ist, eine von dem mobilen Endgerät gemäß dem LAN-Signal gesendete Zugriffsanforderungsnachricht zu empfangen,
- ein Herstellungsmodul (404), das dazu ausgestaltet ist, eine LAN-Verbindung mit dem mobilen Endgerät herzustellen, wobei die LAN-Verbindung eine Wifi-Verbindung ist, und
- ein Sendemodul (405), das dazu ausgestaltet ist, das Steuerprogramm zum Steuern der Vorrichtung über die LAN-Verbindung an das mobile Endgerät zu senden, und
wobei das mobile Endgerät ferner umfasst:
- ein Herstellungsmodul (302), das dazu ausgestaltet ist, die LAN-Verbindung mit der Vorrichtung gemäß dem LAN-Signal herzustellen, und
- ein Herunterlademodul (303), das dazu ausgestaltet ist, das Steuerprogramm zum Steuern der Vorrichtung über die LAN-Verbindung von der Vorrichtung herunterzuladen.

6. System nach Anspruch 5, **dadurch gekennzeichnet, dass**
das Steuerprogramm mindestens eine Steuerschnittstelle zum Steuern der Vorrichtung und einen Steuerbefehl zum Steuern der zu steuernden Vorrichtung umfasst, wobei die Steuerschnittstelle mindestens einen Control Port beinhaltet, der einem oder mehreren Steuerbefehl/en in dem Steuerprogramm entspricht, und das mobile Endgerät ferner umfasst:
ein Steuermodul (304), das dazu ausgestaltet ist, den von einem Benutzer in der Steuerschnittstelle ausgewählten Control Port zu empfangen, den dem ausgewählten Control Port entsprechenden Steuerbefehl zu erfassen und den erfassten Steuerbefehl über das LAN an die zu steuernde Vorrichtung zu senden, sodass die zu steuernde Vorrichtung den erfassten Steuerbefehl ausführt.

7. System nach Anspruch 5 oder 6, **dadurch gekennzeichnet, dass** das Steuerprogramm ein basierend auf der fünften geänderten HyperText-Auszeichnungssprache Html5 entwickeltes Programm ist und das Steuerprogramm mit einem mobilen Betriebssystem der ios-Plattform und einer Android-Plattform kompatibel ist.

## Revendications

1. Procédé mis en œuvre par un système comprenant un terminal mobile et un dispositif à contrôler, le procédé comprend les étapes de :
lorsqu'une instruction de commutation est détectée, le dispositif entrant (110) dans un mode Point d'Accès, AP, où le mode AP est un mode AP Wifi ;
lorsqu'il est déterminé que le téléchargement via Internet d'un programme de contrôle pour contrôler le dispositif n'a pas réussi, le terminal mobile émettant des informations suggestives pour suggérer à un utilisateur que le téléchargement du programme de contrôle pour contrôler le dispositif via Internet n'a pas réussi ;
lorsqu'une instruction de conversion d'une manière d'acquérir le programme de contrôle entré par l'utilisateur est détectée, le terminal mobile recevant (101) un signal de Réseau Local, LAN, envoyé par le dispositif après l'entrée dans le mode AP, où le signal LAN est un signal de diffusion Wifi ;
le dispositif recevant (112) un message de demande d'accès envoyé par le terminal mobile selon le signal LAN ;
le terminal mobile établissant (102) une connexion LAN avec le dispositif selon le signal LAN, ladite connexion LAN étant une connexion Wifi ; et
le terminal mobile téléchargeant (103) depuis le dispositif, par l'intermédiaire de la connexion LAN, le programme de contrôle pour contrôler ledit dispositif.

2. Procédé selon la revendication 1, **caractérisé en ce que**, le programme de contrôle comprend au moins une interface de contrôle pour contrôler le dispositif et une commande de contrôle pour contrôler ledit dispositif, l'interface de contrôle incluant au moins un port de contrôle correspondant à une ou plusieurs commandes de contrôle dans le programme de contrôle, le procédé comprenant en outre les étapes de :
le terminal mobile recevant le port de contrôle sélectionné dans l'interface de contrôle par un utilisateur, acquérant la commande de contrôle correspondant au port de contrôle sélectionné, et envoyant la commande de contrôle acquise au dispositif via le LAN, de sorte que le dispositif exécute la commande de contrôle acquise.

3. Procédé selon la revendication 1 ou 2, **caractérisé en ce que**, le programme de contrôle est un programme développé sur la base du cinquième langage de balisage HyperTexte amendé Html5, et le programme de contrôle est compatible avec une plate-forme de système d'exploitation mobile ios et une plate-forme android.

4. Programme d'ordinateur incluant des instructions qui, lorsque le programme est exécuté par un ordinateur, amènent l'ordinateur à effectuer les étapes du procédé selon l'une quelconque des revendications 1 à 3.

5. Système comprenant un terminal mobile exploitable pour télécharger un programme de contrôle et un dispositif exploitable pour téléverser le programme de contrôle,
dans lequel le dispositif comprend un module d'entrée (401) configuré, lorsqu'une instruction de commutation est détectée, pour entrer dans un mode point d'accès, AP, où le mode AP est un mode AP Wifi ;
dans lequel le terminal mobile comprend :
- un module suggestif (305) configuré, lorsque le téléchargement via Internet du programme de contrôle pour contrôler le dispositif est déterminé comme n'ayant pas réussi, pour émettre des informations suggestives pour suggérer à un utilisateur que le téléchargement via Internet du programme de contrôle pour contrôler le dispositif via Internet n'a pas réussi ; et
- un module de réception (301) configuré, lorsqu'une instruction de conversion d'une manière d'acquérir le programme de contrôle entré par l'utilisateur est détectée, pour recevoir un signal de Réseau Local, LAN, envoyé par le dispositif après l'entrée dans le mode AP, où le signal LAN est un signal de diffusion Wifi ;
dans lequel le dispositif comprend en outre :
- un module de diffusion (402) configuré pour diffuser le signal LAN après l'entrée dans le mode AP ;
- un module de réception (403) configuré pour recevoir un message de demande d'accès envoyé par le terminal mobile selon le signal LAN ;
- un module d'établissement (404) configuré pour établir une connexion LAN avec le terminal mobile, ladite connexion LAN étant une connexion Wifi ; et
- un module d'envoi (405) configuré pour envoyer au terminal mobile, via la connexion LAN, le programme de contrôle pour contrôler ledit dispositif ; et
dans lequel le terminal mobile comprend en outre :
- un module d'établissement (302) configuré pour établir la connexion LAN avec le dispositif selon le signal LAN ; et
- un module de téléchargement (303) configuré pour télécharger, depuis le dispositif, par l'intermédiaire de la connexion LAN, le programme de contrôle pour contrôler ledit dispositif.

6. Système selon la revendication 5, **caractérisé en ce que**,
le programme de contrôle comprend au moins une interface de contrôle pour contrôler le dispositif et une commande de contrôle pour contrôler le dispositif à contrôler, l'interface de contrôle incluant au moins un port de contrôle correspondant à une ou plusieurs commandes de contrôle dans le programme de contrôle, le terminal mobile comprenant en outre :
un module de contrôle (304) configuré pour recevoir le port de contrôle sélectionné dans l'interface de contrôle par un utilisateur, acquérir la commande de contrôle correspondant au port de contrôle sélectionné, et envoyer la commande de contrôle acquise au dispositif à contrôler via le LAN, de sorte que le dispositif à contrôler exécute la commande de contrôle acquise.

7. Système selon la revendication 5 ou 6, **caractérisé en ce que**, le programme de contrôle est un programme développé sur la base du cinquième langage de balisage HyperTexte amendé Html5, et le programme de contrôle est compatible avec une plate-forme de système d'exploitation mobile ios et une plate-forme android.
